Europäisches Patentamt

(19) European Patent Office

Office européen des brevets

(11) Numéro de publication : **0 281 613 B1**

# (12) FASCICULE DE BREVET EUROPEEN

(45) Date de publication du fascicule du brevet :
**04.12.91 Bulletin 91/49**

(51) Int. Cl.⁵ : **B29C 51/00, B29C 67/14**

(21) Numéro de dépôt : **87906189.3**

(22) Date de dépôt : **15.09.87**

(86) Numéro de dépôt international :
**PCT/FR87/00357**

(87) Numéro de publication internationale :
**WO 88/01932 24.03.88 Gazette 88/07**

(54) **PROCEDE DE REALISATION PAR EMBOUTISSAGE DE PIECES EN MATERIAUX COMPOSITES, ET DISPOSITIF POUR SA MISE EN UVRE.**

(30) Priorité : **17.09.86 FR 8613007**
**10.04.87 FR 8705107**

(43) Date de publication de la demande :
**14.09.88 Bulletin 88/37**

(45) Mention de la délivrance du brevet :
**04.12.91 Bulletin 91/49**

(84) Etats contractants désignés :
**DE FR GB IT NL**

(56) Documents cités :
**FR-A- 1 557 352**
**FR-A- 2 202 774**
**FR-A- 2 274 441**
**FR-A- 2 559 099**
**FR-A- 2 567 807**
**GB-A- 1 013 012**
**GB-A- 2 160 467**

(56) Documents cités :
**US-A- 1 916 435**
**US-A- 2 115 065**
**US-A- 2 495 640**
**US-A- 2 964 442**
**US-A- 3 055 058**
**US-A- 3 704 970**

(73) Titulaire : **BRONZAVIA AERONAUTIQUE**
**2/10, rue Jean-Perrin**
**F-92000 Nanterre (FR)**

(72) Inventeur : **DIEUL, Jean**
**16, rue du Pré-sous-la-Ferme**
**F-78180 Voisins-le-Bretonneux (FR)**
Inventeur : **BONNEAU, Jean-Claude**
**20, rue Alexis Maneyrol**
**F-92370 Chaville (FR)**

(74) Mandataire : **Dawidowicz, Armand**
**Cabinet Dawidowicz 18, Boulevard Pereire**
**F-75017 Paris (FR)**

## Description

L'invention concerne un procédé pour réaliser des pièces en matériaux composites à base de fibres continues et de résine présentant des formes embouties, ainsi qu'un dispositif pour la mise en oeuvre de ce procédé.

De plus en plus de pièces sont réalisées en matériaux composites à base d'un liant en résine synthétique recevant des fibres continues. La résine est soit thremoplastique, soit thermodurcissable, par exemple époxyde ou polystyrilpyridine, ou bien encore polyimide et les fibres sont des fibres de verre, de carbone, ou bien un mélange de fibres de divers matériaux.

Plusieurs procédés sont actuellement connus pour réaliser des pièces en matériaux composites présentant des reliefs particuliers.

On connaît par exemple la technique du drapage qui permet, partant d'un tissu à base de fibres nouées, préimprégnées de résine, d'obtenir une pièce possédant des reliefs particuliers, en réalisant des plis dans le tissu et en effectuant une polymérisation de la résine lorsque la forme souhaitée est obtenue. Cette technique permet d'obtenir des pièces possédant des caractéristiques mécaniques correctes, mais la réalisation des plis lors du drapage pose des problèmes de finition et nécessite un pressage de la pièce ou un passage en autoclave haute pression, ce qui implique de forts investissements.

Un autre procédé consiste à réaliser un emboutissage d'une superposition orientée de couches unidirectionnelles de fibres préimprégnées de résine, puis à effectuer une polymérisation. Un procédé de ce type est décrit notamment dans le brevet US A 2 115 065. Ce procédé présente un certain nombre d'inconvénients. Ainsi, lors de l'emboutissage, les fibres peuvent se déplacer de façon anarchique et la rigidité de la pièce finie s'en trouve affectée. Enfin, l'utilisation de tissus préimprégnés provoque des contraintes importantes sur les fibres lors de l'emboutissage, ce qui peut entraîner leur rupture.

On connaît encore, par US-A-2495640, un procédé de fabrication de pièces résineuses renforcées par des fibres selon lequel le tissu de base est imprégné de résine après avoir été embouti ou formé, puis une force d'imprégnation et d'expulsion des bulles est appliquée à la résine. Ce procédé connu ne permet pas d'obtenir un emboutissage profond avec des formes complexes et avec une évacuation parfaite des bulles.

De même, dans FR-A-2559099, on décrit un matériau composite constitué d'un tissu emboutissable imprégné d'une résine organique, dans lequel un emboutissage profond provoquerait une rupture des fibres et n'est donc pas praticable.

L'invention a pour objet un procédé qui permette de réaliser des pièces en matériaux composites à base de fibres continues et d'un liant, qui possèdent des formes embouties, et dont les fibres ne soient pas détériorées lors de la réalisation.

Selon l'invention, un procédé pour réaliser des pièces en matériau composite à base d'un tissu constitué d'au moins deux couches unidirectionnelles, superposées, de fibres continues libres les unes par rapport aux autres, orientées dans un sens différent d'une couche à l'autre, et maintenues à l'aide d'un fil de liaison piqué, consistant à emboutir le tissu dans une matrice, à l'aide d'un poinçon, à imprégner la pièce à l'aide de la quantité de résine ou de liant nécessaire à la cohésion de la pièce finie, puis à comprimer l'ensemble formé par la résine ou le liant et le tissu entre la matrice et le poinçon, de façon à dégazer la résine par laminage, tout en contrôlant la position relative du poinçon et de la matrice, de façon à stopper le mouvement du poinçon lorsque ladite position relative est telle que l'épaisseur souhaitée de la pièce est obtenue, puis à polymériser la résine en portant la matrice et/ou le poinçon à une température suffisante, et à démouler la pièce finie après l'avoir laissée refroidir, ainsi que la matrice et/ou le poinçon, est caractérisé en ce que, pendant l'emboutissage du tissu et l'imprégnation de la pièce, on applique à chacune des fibres, à la périphérie du bord du creux de la matrice, une tension contrôlée de valeur variant alternativement.

Selon un mode de réalisation préférentiel, on module la tension appliquée sur les fibres à la périphérie du bord creux de la matrice. Par modulation, on entend l'application de tensions ou efforts pendant des durées déterminées avec interposition de relâchements. Les tensions ou efforts appliqués sont fonction de la surface qui reste à emboutir. Le relâchement n'est jamais complet. On applique toujours une tension résiduelle à la périphérie des fibres. Cette technique permet d'obtenir un emboutissage plus profond sans casser les fibres. Elle permet d'autre part d'emboutir des pièces de formes très complexes.

Dans un mode de mise en oeuvre, le procédé est caractérisé en ce qu'il consiste, après avoir commencé l'emboutissage, à stopper le mouvement du poinçon juste avant que le tissu ne se trouve comprimé entre le poinçon et la matrice, à injecter entre le poinçon et la matrice, dans l'espace occupé par le tissu, la quantité de liant ou de résine nécessaire à la cohésion de la pièce finie, à comprimer l'ensemble formé par la résine et le tissu en reprenant le mouvement du poinçon, de façon à dégazer le résine par laminage, tout en contrôlant la position relative de la matrice et du poinçon puis à polymériser la résine en portant la matrice et/ou le poinçon à une température suffisante, et à ressortir la pièce finie après l'avoir laissé refroidir ainsi que la matrice et/ou le poinçon.

Selon un autre mode de réalisation, de manière à obtenir une compression correcte entre les bords du poinçon et les bords de la matrice, principalement lorsque lesdits bords sont presque parallèles à l'axe de déplacement du poinçon, on augmente l'ensemble du volume du poinçon à l'intérieur de la matrice pour comprimer, entre le poinçon et la matrice, l'ensemble formé par le tissu et la résine ou le liant, tout en contrôlant cette augmentation de volume de façon à la stopper lorsque l'épaisseur souhaitée de la pièce est obtenue, entre la fin de la phase d'emboutissage et la fin de la phase de polymérisation.

Ce mode de réalisation est donc particulièrement avantageux puisqu'il permet une compression avant polymérisation en tous points de la pièce, de sorte que l'épaisseur souhaitée est obtenue partout.

Dans une variante, la quantité de résine nécessaire est déposée au fond de la matrice, avant que le poinçon n'ait amorcé l'emboutissage. Il est clair que le volume nécessaire de résine est nettement inférieur à celui de la matrice et qu'en conséquence, l'emboutissage du tissu est pratiquement terminé lorsque le tissu poussé par le poinçon arrive au contact de la résine et aucune contrainte due à l'imprégnation par la résine n'apparaît donc lors de l'emboutissage.

Dans une autre variante, une quantité de résine inférieure à la quantité nécessaire est déposée au fond de la matrice avant l'emboutissage, et un complément est injecté avant que le tissu ne se trouve comprimé entre le poinçon et la matrice.

Cette variante constitue donc une combinaison des deux premières.

Le procédé de l'invention est donc particulièrement avantageux car il permet de résoudre divers problèmes apparaissant dans l'art antérieur.

Tout d'abord, l'utilisation d'un tissu constitué de couches unidirectionnelles de fibres continues superposées évite que, lors de l'emboutissage, des points de cisaillement apparaissent entre deux fibres de deux couches différentes ou même entre deux fibres d'une même couche. Des points de cisaillement sont constitués, par exemple, par des coudes apparaissant aux points de croisement lorsque des fibres se croisent en passant successivement d'une couche à l'autre.

Ensuite, le maintien des fibres par un fil de liaison évite que la répartition des fibres devienne anarchique lors de l'emboutissage. Le fait que ce fil de liaison soit piqué et non tissé évite tout cissaillement des fibres. De plus, le fait que l'emboutissage du tissu soit effectué en maintenant une tension contrôlée des fibres contribue à leur bonne répartition et évite en particulier l'apparition de plissages dans le tissu lors de l'emboutissage. La modulation de la tension contrôlée permet d'obtenir un emboutissage plus profond en évitant de casser les fibres.

En outre, l'emboutissage préalable du tissu avant la mise en place de la résine permet aussi d'éviter de trop grandes contraintes sur les fibres et l'apparition de forces qui tendraient à les casser.

Enfin, lorsque la résine est mise en place les fibres sont tendues contre le poinçon et aucun déplacement de celles-ci ne peut survenir. La compression qui suit la mise en place de la résine permet d'une part un laminage de la résine qui supprime les bulles d'air qui pourraient se trouver dans l'épaisseur du matériau, et d'autre part crée une tension supplémentaire des fibres qui augmente la cohésion de la pièce finie.

L'invention concerne également un dispositif pour la mise en oeuvre du procédé précédent comportant une matrice creuse, un poinçon, et des moyens de chauffage de la matrice et/ou du poinçon, caractérisé en ce qu'il comporte en outre des moyens pour assurer une pression contrôlée de part et d'autre du tissu autour des bords du creux de la matrice.

Dans un mode de réalisation, les moyens pour assurer une pression sont un serre-flan constitué par au moins deux mâchoires pouvant se rapprocher relativement l'une de l'autre.

Dans un mode de réalisation, l'injection de résine s'effectue à l'aide d'une canalisation débouchant au fond du creux de la matrice ou en tout autre lieu si nécessaire. Lorsque la résine est injectée, elle passe donc du fond du creux de la matrice vers les bords, en imprégnant le tissu au fur et à mesure de sa progression.

D'autre caractéristiques et avantages de l'invention apparaîtront avec la description faite en regard des figures annexées sur lesquelles :
   – la figure 1 est un schéma de principe d'un dispositif pour la mise en oeuvre du procédé de l'invention;
   – les figures 2 et 3 montrent deux phases du procédé mis en oeuvre par ledit dispositif;
   – la figure 4 est un schéma de principe d'un second mode de réalisation d'un dispositif pour la mise en oeuvre du procédé de l'invention, et
   – les figures 5,6,7 sont des détails d'un tissu préféré pour la mise en oeuvre du procédé de l'invention.

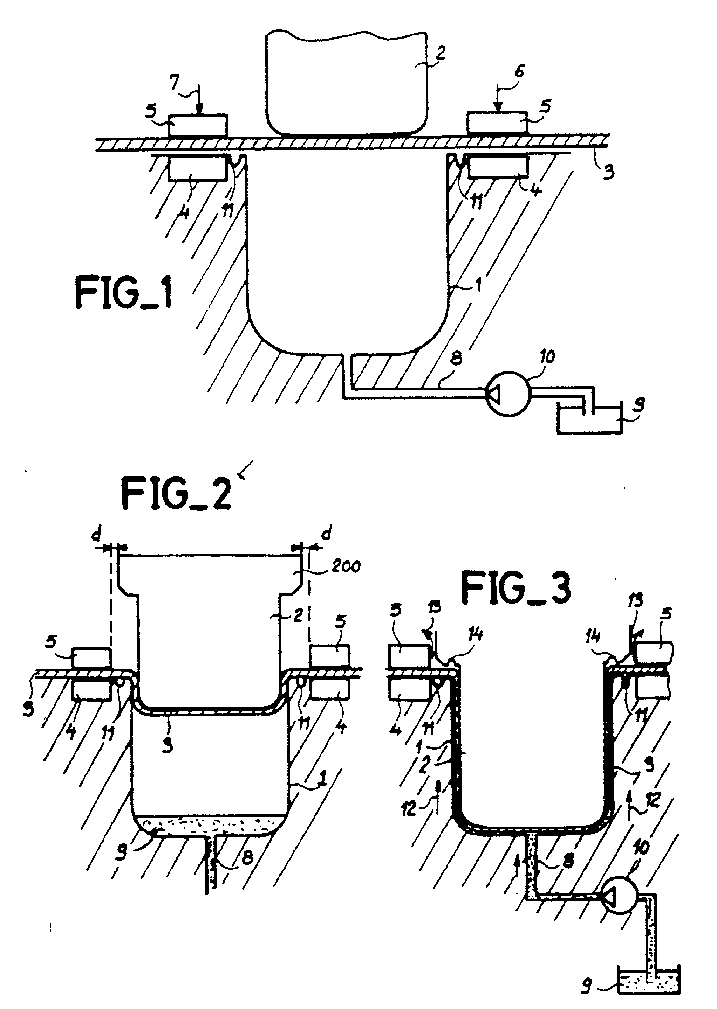

Sur la figure 1, on a représenté schématiquement un dispositif pour emboutir les pièces conformément à l'invention, et la position relative du tissu et du dispositif avant l'emboutissage.

Le dispositif comporte une matrice 1 creuse et un poinçon 2 pour l'emboutissage du tissu 3. Le tissu 3 est, préalablement à l'emboutissage, placé en regard du bord du creux de la matrice. Dans l'exemple, l'ouverture de la matrice 1 est vers le haut, et le tissu 3 est donc placé au-dessus de cette ouverture.

D'autre part, le dispositif comporte des moyens de serrage du tissu, afin de permettre sa tension contrôlée lors de l'emboutissage et de la polymérisation du liant. Ces moyens de serrage sont constitués, dans le mode de réalisation préféré, représenté sur la figure, par un serre-flan 4, 5, dont une première machoire 4 entoure par exemple l'ouverture de la matrice 1 et est fixe et dont l'autre 5, dans ce cas, est mobile, comme le montrent les flèches 6, 7 de façon à pouvoir venir serrer le tissu contre la première.

La force de serrage doit être déterminée par des essais, en fonction de l'épaisseur du tissu et de la forme de la pièce à obtenir.

De préférence, la force de serrage est modulée. Ainsi, une force de serrage de valeurs croissantes est appliquée sur le serre-flan, avec interposition de périodes de relâchement pendant lesquelles la force de serrage est légèrement supérieure à zéro. Ceci permet d'avoir un emboutissage profond sans rupture des fibres.

Au moins une canalisation 8 débouche dans le fond du creux de la matrice 1 et permet l'arrivée de la résine ou du liant 9, contenu dans une réserve, qu'il est possible d'injecter par une pompe 10 ou d'autres moyens. Selon une variante de réalisation, l'injection de la résine peut être réalisée à travers le poinçon.

Egalement, de préférence, la matrice est munie d'au moins une gorge de détente 11 dont le rôle est expliqué ultérieurement.

La figure 2 représente le dispositif lorsque l'emboutissage du tissu 3 a débuté.

Le poinçon 2 est dans une phase de descente et les machoires 4, 5 du serre-flan sont serrées de façon à permettre néanmoins que le tissu 3 glisse à l'intérieur sans subir de détériorations, mais qu'il épouse parfaitement la forme extérieure du poinçon 1.

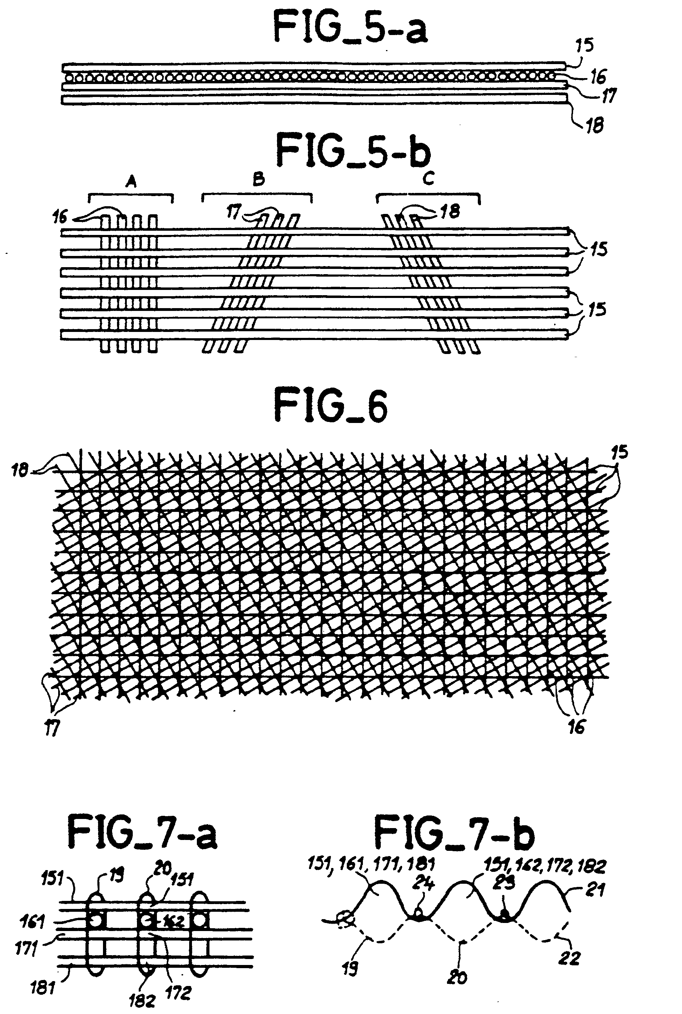

Afin de permettre que le tissu épouse la forme du poinçon, toutes ses fibres sont libres les unes par rapport aux autres, comme il est expliqué ultérieurement, en regard des figures 5 à 7.

Cette figure illustre la seconde variante du procédé, à savoir celle selon laquelle une certaine quantité de résine ou de liant 9 est mise au fond de la matrice 1 avant que l'emboutissage n'ait commencé. Il est bien visible sur cette figure que ce sont les parties embouties du tissu 3 qui arrivent en premier au contact de la résine 9, et que ce sont donc des parties qui ont leur forme définitive et, de fait, ne vont plus subir de déformations lors de la suite du processus. En conséquence, le fait que ces parties arrivent au contact de la résine avant que le poinçon 2 ait terminé sa course n'est pas préjudiciable à la tenue des fibres, et n'entraîne pas de contraintes supplémentaires.

Par la suite, lorsque le poinçon continue sa descente, il est clair que la résine 9 remonte par capillarité sous l'effet de la pression et imprègne le tissu 3 au fur et à mesure.

Dans la première variante, lorsque le poinçon 2 descend pour emboutir le tissu, la résine 9 n'est pas encore présente, mais est injectée lorsque le tissu 3 est presque au contact du fond de la matrice 1, avant d'être comprimé.

Les bords supérieurs 200 du poinçon 2 sont également agencés pour qu'il subsiste un espace ou un évent d entre eux et la machoire 5 mobile lorsque la descente du poinçon est totalement achevée, de sorte qu'un éventuel excès de liant ou de résine puisse être évacué par cet espace.

Sur la figure 3, on a représenté la phase pendant laquelle la résine est injectée.

Le poinçon 2 a presque terminé sa course dans la matrice 1, mais le tissu n'est pas comprimé sur les bords de la matrice. Ceci permet d'injecter la résine 9, grâce à la pompe 10 et à la canalisation 8, entre la matrice 1 et le poinçon 2, de sorte qu'elle vienne remplir le maillage du tissu 3.

La résine, dans le cas de figure représenté, remonte vers les bords du creux de la matrice 1 en remplissant les mailles du tissu, comme l'indiquent les flèches 12.

Sur cette figure, on a également représenté des gorges de détente 14 sur le poinçon 2.

Ces gorges de détente, ainsi que celles 11 de la matrice permettent de détecter que la résine ou le liant a rempli effectivement les endroits où elle doit se trouver. En effet, lorsque la résine les atteint, la pression d'injection se stabilise ou diminue, et un opérateur, ou un dispositif associé à l'étage d'injection, peut détecter cette stabilisation ou diminution de pression et commander alors la suite du processus.

Dans un mode de réalisation, non représenté, les bords de la matrice et/ou du poinçon sont munis d'un réseau de rainurages ou trous de distribution qui favorisent la diffusion du liant ou de la résine de part et d'autre de chaque côté du tissu lors de l'injection.

Des gorges de détente peuvent également être placées en d'autres endroits de la matrice 1 et/ou du poinçon 2, qu'à la proximité des bords du creux de la matrice 1, de façon à pouvoir surveiller la progression du liant ou de la résine dans le dispositif, sans compromettre le démoulage de la pièce.

La suite du processus est la suivante: dès qu'il est détecté qu'un volume suffisant de résine a été injecté, l'opérateur ou le dispositif de détection commande l'arrêt de l'injection, puis la compression de l'ensemble formé par la résine et le tissu, afin d'une part de dégazer le tout pour éviter la présence de bulles d'air dans la pièce finie et d'autre part de contraindre les fibres dans la résine pour donner plus de cohésion à la pièce finie. L'excès de liant ou de résine est évacué par l'évent prévu à cet effet, en partie haute entre le poinçon 2 et les machoires 5 dans le cas de figure représenté, comme le montre la flèche 13. Enfin, tout en maintenant la compression, la matrice et/ou le poinçon sont chauffés pour polymériser le liant ou la résine.

Dans une variante selon laquelle une certaine quantité de résine 9 est placée dans le fond de la matrice 1 avant l'emboutissage, deux cas peuvent se présenter:

– la quantité placée est suffisante, et dans ce cas, la résine va aboutir, lors de sa remontée, dans les gorges de détente 11, 14 de la matrice et/ou du poinçon, puis remonter par l'évent d. Si tel est le cas, il suffit d'attendre que le poinçon 2 et la matrice 1 soient dans la position relative correspondant à l'épaisseur souhaitée de la pièce, après compression, pour effectuer la polymérisation ;

– la quantité de résine placée au fond est insuffisante; on s'en rend compte lorsque simultanément le poinçon et la matrice sont dans une position telle que le tissu est au contact des deux sans être encore compressé et qu'aucun excès de résine ne s'est évacué par l'évent d ou n'a abouti dans les gorges de détente 11, 14.

Dans ce cas, on procède à une injection complémentaire de résine par la canalisation 8, et on attend la détection du passage de la résine dans les gorges de détente 11, 14, ou la fuite d'un excès par l'évent, avant de comprimer pour dégazer et de polymériser.

Dans le but de polymériser l'ensemble résine et tissu, la matrice et/ou le poinçon sont munis, dans un mode de réalisation préféré, d'éléments de chauffage tels que des résistances électriques. Ces éléments de chauffage fournissent une température fonction du cyle de polymérisation de la résine utilisée.

Une fois la polymérisation effectuée, on laisse refroidir le moule puis on relache la compression et on démoule la pièce finie.

Dans une variante de mise en oeuvre, la matrice et/ou le poinçon 2 sont préchauffés pendant la phase d'injection, afin de favoriser la diffusion du liant ou de la résine et de gagner du temps sur la phase de polymérisation.

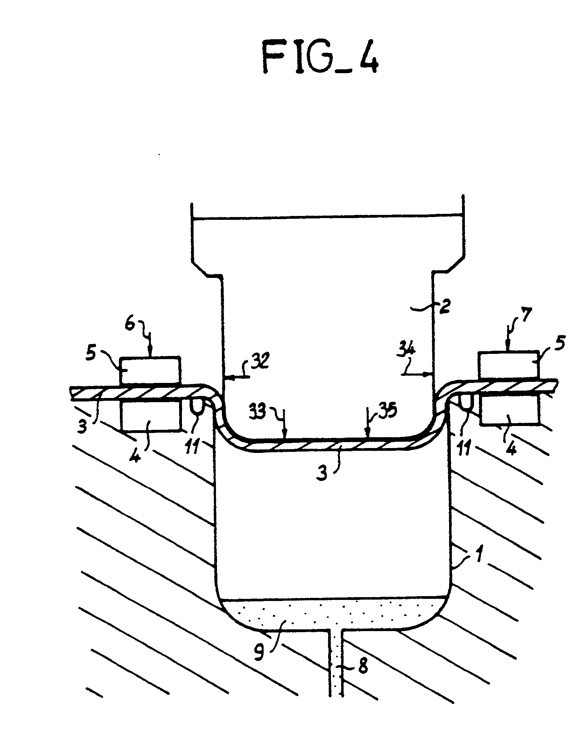

Le dispositif de la figure 4 comporte, comme le dispositif de la figure 1, une matrice 1 creuse, un poinçon 2 pour l'emboutissage du tissu 3, ces moyens de serrage du tissu 3, tels qu'un serre-flanc, afin de permettre sa tension contrôlée lors de l'emboutissage et de la polymérisation du liant ou de la résine.

Au moins, une canalisation 8 débouche dans le fond creux de la matrice 1 et permet l'arrivée de la résine ou du liant 9, par l'intermédiaire dune pompe non représentée.

De préférence, la matrice est également pourvue de gorges de détente 11 situées, dans l'exemple, autour de son ouverture. Les gorges se remplissent lorsque le tissu est complètement imprégné de résine ou de liant, permettant de détecter que la quantité nécessaire de résine est présente.

Conformément à ce mode de réalisation, l'ensemble du volume du poinçon 2 peut être augmenté comme le montrent des flèches 32,33,34,35 sur la figure 4. Cette augmentation de volume est déclenchée lorsque le tissu est totalement embouti, et après que la résine ait été mise en place.

Toutefois, cette augmentation de volume peut aussi avoir lieu dans le cas où la résine 9 n'est pas présente en fond de matrice 1 avant l'emboutissage, mais est injectée à la fin de cette phase. La résine remonte alors le long des bords sous l'effet de la pression d'injection produite par la pompe non représentée, et imprègne le tissu.

La compression du tissu et de la matrice après imprégnation est obtenue en augmentation le volume du poinçon, dès lors que la quantité de résine nécessaire est en place. La détection que la quantité nécessaire de résine est en place s'effectue grâce aux gorges de détente 11.

Dans un mode de réalisation d'un dispositif 12, le poinçon 2 est expansible de manière réversible, et l'expansion est obtenue à l'aide de moyens mécaniques tels que vis, leviers, vérins ou tout autre moyen connu en soi permettant d'augmenter le volume extérieur d'une structure. Dans ce cas, l'intérieur du poinçon est creux, et pourvu desdits moyens, et l'extérieur est constitué par une enveloppe sur laquelle agissent lesdits moyens.

Aini, par exemple, les moyens peuvent agir sur des lamelles métalliques qui sont agencées pour donner une forme générale au poinçon, et qui sont recouverts par une enveloppe élastique en forme de chaussette constituée dans un matériau resistant à la température de polymérisation. Cette enveloppe évite que d'une part, l'empreinte des lamelles apparaisse sur la pièce finie, et que d'autre part, la résine se répande à l'intérieur du poinçon.

Ce dispositif expansible est tout particulièrement adapté dans les cas où la polymérisation a lieu à froid ou à basse température, c'est-à-dire par exemple dans les cas où la polymérisation est amorcée à froid à l'aide d'un catalyseur. Une telle opération de polymérisation est généralement exothermique, de sorte que le poinçon et la matrice sont chauffés pendant la polymérisation.

Pour les cas où la polymérisation s'effectue à chaud, la matrice et/ou l'intérieur du poinçon sont pourvus d'éléments chauffants qui permettent d'amener la résine ou le liant à la température de polymérisation.

Afin de faciliter le démoulage, que le polymérisation s'effectue à froid ou à chaud, le poinçon est ramené à son volume d'origine après la polymérisation.

Ce mode de réalisation est cependant coûteux et difficile à mettre au point, et c'est pourquoi, dans un mode de réalisation préféré d'un dispositif pour la mise en oeuvre du procédé de l'invention, dans les cas où la polymérisation s'effectue à chaud, le poinçon 2 est dans un matériau qui possède un coefficient de dilatation thermique supérieur à celui de la matrice 1, et à la fois la matrice et le poinçon sont pourvus d'éléments chauffants, non représentés, pour le préchauffage de la résine pendant l'imprégnation et pour obtenir la température de polymérisation de la résine.

Les éléments chauffants sont par exemple des résistances électriques disposées dans le poinçon et autour du creux de la matrice, dans la masse.

La compression après imprégnation s'obtient dans ce cas en dilatant le poinçon 2 dans la matrice 1, de sorte q'il existe un rapprochement relatif entre ces deux éléments, qui de plus entraîne une tension complémentaire des fibres.

La dilatation débute dès la phase de préchauffage et continue pendant la polymérisation, en mettant en service des éléments chauffants. Le contrôle de la dilatation est possible puisqu'on connaît les constantes physiques du poinçon et de la matrice, ainsi que les durées et températures de préchauffage et de polymérisation. Plus précisément, on détermine les matériaux constitutifs du poinçon et de la matrice, ainsi que leurs dimensions à froid en connaissant les températures et la durée des phases de chauffage auxquelles ils seront soumis, de façon à contrôler la compression.

Ainsi, dans un mode de réalisation, le poinçon est dans un alliage léger, par exemple à base d'aluminium, dont le coefficient de dilatation thermique est de l'ordre de $23.10^{-6}$ m/°C et la matrice est en fonte ou dans un acier dont le coefficient de dilatation est de l'ordre de $11.10^{-6}$ m/°C.

Donc, lorsque le poinçon a totalement embouti le tissu 3 dans la matrice 1, les éléments chauffants du poinçon et de la matrice sont mis en service, de sorte que le poinçon se dilate à l'intérieur de la matrice, provoquant un essorage du tissu et une compression complémentaire, et la polymérisation est alors effectuée comme décrit ci-dessus.

Il est souhaitable que le poinçon et la matrice soient simultanément aux même températures, afin d'éviter un gradient de température au travers du tissu et de la résine qui nuirait à la qualité de la pièce finie.

Ce mode de réalisation est particulièrement avantageux car il est peu coûteux et évite d'avoir recours à la réalisation d'un poinçon déformable mécaniquement. Par ailleurs, la dilatation a lieu dans toutes les directions, de sorte qu'il n'existe pas de zone privilégiée, alors qu'un dispositif mécanique est imparfait et ne peut pas être contrôlé dans toutes les directions.

De plus, connaissant les constantes physiques des matériaux et les températures, il est aisé de déterminer quelle sera l'augmentation de volume du poinçon, et donc quelle sera l'épaisseur de la pièce.

Les figures 5 à 7 montrent des détails d'un type de tissu préféré pour la mise en oeuvre du procédé de l'invention.

De préférence, comme le montrent ces figures, le tissu est composé de quatre couches superposées de fibres unidirectionnelles libres les unes par rapport aux autres et formant une structure indémaillable.

Les figures 5a, 5b, 6 montrent la superposition et l'orientation relatives des couches les unes par rapport aux autres.

Sur la figure 5a, on a représenté la position relative des couches l'une par rapport à l'autre.

Les fibres d'une première couche 15 constituent une trame et sont perpendiculaires aux fibres d'une seconde 16 constituant la chaîne, alors que les fibres d'une troisième 17 et quatrième 18 couches font un angle entre elles et avec les fibres des première et seconde couches, et constituent des diagonales.

Dans une même couche, les fibres sont regroupées en paquets formant des fils disposés parallèlement les uns par rapport aux autres, et le plus près possible les uns des autres, de sorte que les mailles du tissu, avant l'emboutissage, soient les plus petites posibles.

La figure 5b possède trois parties A, B, C distinctes montrant respectivement la position relative des seconde 16, troisième 17 et quatrième 18 couches par rapport à la première 15. En réalité, les quatre couches sont superposées.

Sur cette figure 5b, on constate donc que les première et seconde couches forment la trame et la chaîne du tissu, alors que les troisième 17 et quatrième 18 forment deux diagonales, et la figure 5 montre la répartition relative de chacune des couches, et donne une idée d'ensemble du tissu achevé.

Selon l'utilisation souhaitée, on détermine par avance les angles optimum entre les fibres des diverses couches, et on choisit ou prépare le tissu en conséquence.

Les figures 7a et 7b montrent comment la cohésion du tissu est assurée pendant l'emboutissage. En tous les points où quatre paquets 151, 161, 171, 181 de fibres élémentaires dune même couche sont superposés, on les lie à l'aide dune boucle 19, 20 réalisée par deux fils 21, 22 se croisant entre deux séries 151, 161, 171, 181 et 152, 162, 172, 182 de quatre paquets de fibres superposées. Le fils de liaison est donc piqué.

Afin de parfaire la cohésion et de rendre le tissu indémaillable, de préférence à chaque croisement des fils 21, 22 on prévoit que l'un des deux fait un tour mort 23, 24 autour de l'autre.

L'invention n'est pas liée aux seuls modes de mise en oeuvre décrits, mais bien entendu à tous leurs équivalents. Elle est par exemple applicable tout particulièrement à la réalisation de pièces dont les fibres sont à base de carbure de silicium. Elle permet en outre, ce qui est un avantage, d'obtenir de grands rapports dembtoutissage, c'est-à-dire un grand rapport entre la profondeur et le diamètre de la partie emboutie, et dune façon plus générale entre la profondeur et les dimensions de la base de la partie emboutie.

## Revendications

1. Procédé pour réaliser des pièces en matériau composite à base d'un tissu (3) constitué d'au moins deux couches (15, 16, 17, 18) unidirectionnelles, superposées, de fibres continues libres les unes par rapport aux autres, orientées dans un sens différent d'une couche à l'autre, et maintenues à l'aide d'un fil de liaison piqué, consistant à emboutir le tissu (3) dans une matrice (1), à l'aide d'un poinçon (2), à imprégner la pièce à l'aide de la quantité de résine (9) ou de liant nécessaire à la cohésion de la pièce finie, puis à comprimer l'ensemble formé par la résine ou le liant et le tissu entre la matrice (1) et le poinçon (2), de façon à dégazer la résine par laminage, tout en contrôlant la position relative du poinçon et de la matrice, de façon à stopper le mouvement du poinçon lorsque ladite position relative est telle que l'épaisseur souhaitée de la pièce est obtenue, puis à polymériser la résine en portant la matrice et/ou le poinçon à une température suffisante, et à démouler la pièce finie après l'avoir laissé refroidir, ainsi que la matrice et/ou le poinçon, caractérisé en ce que, pendant l'emboutissage du tissu (3) et l'imprégnation de la pièce, on applique à chacune des fibres, à la périphérie du bord du creux de la matrice, une tension contrôlée de valeur variant alternativement.

2. Procédé selon la revendication 1, caractérisé en ce qu'on module la valeur de la tension contrôlée appliquée sur les fils à la périphérie du bord creux de la matrice en interposant des relâchements à une valeur légèrement superieure à zéro.

3. Procédé selon l'une quelconque des revendications 1 et 2, caractérisé en ce qu'il consiste à emboutir le tissu (3) dans une matrice (1) à l'aide d'un poinçon (2), tout en exerçant une tension contrôlée sur chacune des fibres à la périphérie du bord du creux de la matrice, à stopper le mouvement du poinçon juste avant que le tissu ne se trouve comprimé entre le poinçon et la matrice, à injecter entre le poinçon et la matrice, dans l'espace occupé par le tissu, une quantité de liant ou de résine (9) nécessaire à la cohésion de la pièce, à comprimer l'ensemble formé par la résine et le tissu en reprenant le mouvement du poinçon, de façon à dégazer la résine (9) par laminage tout en contrôlant la position relative du poinçon (2) et de la matrice, puis à polymériser la résine en portant la matrice et/ou le poinçon à une température suffisante, et à ressortir la pièce finie après avoir laissé refroidir la pièce ainsi que la matrice et/ou le poinçon.

4. Procédé selon la revendication 3, caractérisé en ce qu'on détecte l'instant où la quantité de résine nécessaire a été injectée, avant de comprimer la résine et le tissu, et de polymériser la résine.

5. Procédé selon l'une quelconque des revendications 1 et 2, caractérisé en ce qu'il consiste à placer une quantité de résine (9) au fond de la matrice (1), puis à faire descendre le poinçon (2) en exerçant une tension contrôlée sur les fibres du tissu, pour l'emboutir, à continuer la descente du poinçon (2) lorsque le tissu est au contact de la résine pour comprimer le tout, de façon à faire remonter la résine vers les bords de la matrice et à dégazer le tout par laminage, et en ce qu'il consiste à effectuer la polymérisation et le démoulage après avoir correctement placé la matrice et le poinçon l'un par rapport à l'autre, de façon à obtenir l'épaisseur souhaitée de la pièce finie, et après avoir constaté que la quantité de résine est suffisante.

6. Procédé selon la revendication 5, caractérisé en ce que, la quantité de résine (9) étant insuffisante, on injecte (8) un complément avant d'effectuer la compression en vue du dégazage.

7. Procédé selon l'une des revendications 1 à 6, caractérisé en ce qu'il consiste à emboutir un tissu (3) constitué de quatre couches unidirectionnelles de fibres continues, une première couche (15) formant la trame du tissu, la seconde (16) formant la chaîne et les deux autres (17, 18) formant deux diagonales dont les fibres de chacune peuvent faire un angle quelconque entre elles et avec les deux premières.

8. Procédé selon la revendication 7, caractérisé en ce que les fibres de chaque couche du tissu (3) sont regroupées par paquets et en ce qu'en chaque point de la surface où quatre paquets (151, 161, 171, 181) de fibres sont superposés, est disposée une boucle (19, 20) indémaillable de liaison.

9. Procédé selon la revendication 8, caractérisé en ce qu'une boucle est réalisée par deux fils (21, 22) se croisant entre deux séries de quatre paquets de fibres superposées.

10. Procédé selon l'une des revendications 1 à 9, caractérisé en ce que la matrice (1) et/ou le poinçon (2) sont préchauffés avant l'injection et/ou la compression de la résine ou du liant.

11. Procédé selon la revendication 1, caractérisé en ce que la compression entre le poinçon (2) et la matrice (1) de l'ensemble formé par la résine (9) ou le liant et le tissu (3), est obtenue en augmentant de façon contrôlée l'ensemble du volume du poinçon (2) à l'intérieur de la matrice entre la fin de la phase d'emboutissage et la fin de la phase de polymérisation.

12. Dispositif pour la mise en oeuvre du procédé selon l'une des revendications 1 à 11, comportant une matrice (1) creuse, un poinçon (2), et des moyens de chauffage de la matrice (1) et/ou du poinçon (2), caractérisé en ce qu'il comporte en outre des moyens (4, 5) pour assurer une pression contrôlée de part et d'autre du tissu (3) autour des bords du creux de la matrice.

13. Dispositif selon la revendication 12, caractérisé en ce que les moyens (4, 5) pour assurer une pression contrôlée sont un serre-flan constitué par au moins deux mâchoires (4, 5) pouvant se rapprocher relativement l'une de l'autre.

14. Dispositif selon la revendication 12, caractérisé en ce qu'il comporte au moins une canalisation (8) pour injecter la résine (9) ou le liant, et un dispositif (10) d'injection.

15. Dispositif selon la revendication 14, caractérisé en ce qu'il comporte au moins une gorge de détente (11, 14) sur la matrice (1) et/ou le poinçon (2) et/ou au moins un évent (9) entre le poinçon et une mâchoire (5).

16. Dispositif selon la revendication 15, caractérisé en ce qu'il comporte des moyens pour détecter la stabilisation ou la chute de pressions d'injection lorsque le liant ou la résine arrive dans une gorge de intente, des moyens pour stopper l'injection à te moment, et des moyens pour commander la compression et la mise en route des moyens de chauffage.

17. Dispositif selon l'une des revendications 12 à 16, caractérisé en ce qu'il comporte un réseau de rainurages sur la matrice (1) et/ou le poinçon (2) pour favoriser la diffusion de la résine (9) ou du liant.

18. Dispositif selon la revendication 12, caractérisé en ce que le poinçon (2) est expansible de façon réversible à l'intérieur de la matrice.

19. Dispositif selon la revendication 18, caractérisé en ce que le poinçon (2) possède une paroi externe déformable à l'aide de moyens mécaniques.

20. Dispositif selon la revendication 19, caractérisé en ce que le poinçon (2) est creux et en ce que les moyens mécaniques sont à l'intérieur du creux, et sont liés à la paroi externe.

21. Dispositif selon la revendication 20, caractérisé en ce que les moyens mécaniques sont choisis parmi les vis, leviers ou vérins et en ce que la paroi externe est constituée d'éléments distincts tels que des lamelles sur lesquelles les moyens mécaniques agissent.

22. Dispositif selon l'une des revendications 19 à 21, caractérisé en ce que la paroi externe est revêtue d'une enveloppe élastique en un matériau résistant à la température de polymérisation.

23. Dispositif selon l'une des revendications 19 à 22, caractérisé en ce que la matrice (1) et/ou le poinçon (2) sont pourvus d'éléments chauffants, tels que des résistances électriques.

24. Dispositif selon la revendication 8, caractérisé en ce que le poinçon (2) et la matrice (1) étant pourvus d'éléments chauffants, le poinçon (2) est dans un matériau possèdant un coefficient de dilatation thermique supérieur à celui de la matrice, de sorte que la compression est obtenue par la dilatation du poinçon (2) lors de la mise en service des éléments chauffants.

25. Dispositif selon la revendication 24, caractérisé en ce que le poinçon (2) est dans un alliage léger.

26. Dispositif selon la revendication 25, caractérisé en ce que la matrice est dans un matériau choisi parmi les aciers ou la fonte.

## Patentansprüche

1. Verfahren zur Herstellung von Teilen aus Verbundmaterial auf der Grundlage eines Gewebes (3), bestehend aus wenigstens zwei in einer Richtung übereinander angeordneten Lagen (15, 16, 17, 18) von durchgehenden Fasern, die im Verhältnis zueinander frei sind und von einer Lage zur anderen in einer anderen Richtung ausgerichtet sind und die mit Hilfe eines gehefteten Verbindungsfadens festgehalten werden, wobei das Gewebe (3) in einer Matrize (1) mit Hilfe eines Stempels (2) tiefgezogen, das Teil mit Hilfe der erforderlichen Menge (9) oder Bindemittel für die Haftung des fertigen Teils imprägniert und dann das ganze Gebilde aus Harz oder Bindemittel und Gewebe zwischen der Matrize (1) und dem Stempel (2) so zusammengepreßt wird, daß das Harz durch Walzung entgast wird, während gleichzeitig die relative Lage von Stempel und Matrize so gesteuert wird, daß die Bewegung des Stempels unterbunden wird, wenn die genannte relative Stellung so beschaffen ist, daß die gewünschte Dicke des Teils erzielt wird, woraufhin das Harz polymerisiert wird, indem man die Matrize und/oder den Stempel auf eine ausreichende Temperatur erhitzt, und wobei das fertige Teil, nachdem das Teil sowie die Matrize und/oder der Stempel abgekühlt ist, entformt wird, **dadurch gekennzeichnet**, daß man während des Tiefziehens des Gewebes (3) und der Imprägnierung des Teils jede einzelne Faser am äußeren Umfang des Randes des Matrizenhohlraums einer gesteuerten Zugspannung unterwirft, deren Wert sich abwechselnd ändert.

2. Verfahren nach Anspruch 1, **dadurch gekennzeichnet**, daß man den Wert der gesteuerten Zugspannung, die auf die Fäden am äußeren Umfang des Randes des Matrizenhohlraums ausgeübt wird, verändert, indem man Lockerungen auf einen Wert knapp über Null einfügt.

3. Verfahren nach einem der Ansprüche 1 und 2, **dadurch gekennzeichnet**, daß dieses im Tiefziehen des Gewebes (3) in einer Matrize (1) mit Hilfe eines Stempels (2) besteht, wobei eine gesteuerte Zügspannung auf jede einzelne Faser am äußeren Umfang des Randes des Matrizenhohlraums ausgeübt wird, daß die Bewegung des Stempels unmittelbar vor dem Zusammenpressen des Gewebes zwischen Stempel und Matrize gestoppt wird, daß in den Raum zwischen Stempel und Matrize, worin sich das Gewebe befindet, eine Menge Bindemittel oder Harz (9) einspritzt, die für die Haftung des Teils erforderlich ist, daß die aus dem Harz und dem Gewebe gebildete Gesamteinheit zusammengepreßt wird, indem man die Bewegung des Stempels unterbindet, so daß das Harz (9) durch Walzung entgast wird, während gleichzeitig die relative Stellung des Stempels (2) und der Matrize gesteuert wird, und daß anschließend das Harz polymerisiert wird, indem man die Temperatur der Matrize und/oder des Stempels ausreichend erhöht, und daß das fertige Teil, nachdem dieses wie auch die Matrize und/oder der Stempel abgekühlt sind, entnimmt.

4. Verfahren nach Anspruch 3, **dadurch gekenn-**

zeichnet, daß man den Moment erfaßt, wo die erforderliche Harzmenge eingespritzt wurde, bevor Harz und Gewebe zusammengepreßt und das Harz polymerisiert wird.

5. Verfahren nach einem der Ansprüche 1 und 2, **dadurch gekennzeichnet** , daß es darin besteht, daß man eine Menge Harz (9) am Boden der Matrize (1) anordnet, dann den Stempel (2) unter Ausübung einer gesteuerten Zugspannung auf die Gewebefasern für den Tiefziehvorgang abwärtsgehen läßt, daß man die Abwärtsbewegung des Stempels (2) fortsetzt, wenn das Gewebe das Harz berührt, um das Ganze zusammenzupressen, so daß das Harz wieder zu den Rändern der Matrize hin ansteigt, und daß das Ganze durch Walzung entgast wird, und daß dieses Verfahren die Polymerisation und Entformung einschließt, nachdem Matrize und Stempel im Verhältnis zueinander richtig eingebaut wurden, so daß die für das fertige Teil gewünschte Dicke zustandekommt, und nachdem festgestellt wurde, daß die Harzmenge ausreicht.

6. Verfahren nach Anspruch 5, **dadurch gekennzeichnet**, daß man, wenn die Harzmenge (9) nicht ausreicht, eine Ergänzungsmenge einspritzt (8), bevor die Entgasung durch Zusammenpressen bewirkt wird.

7. Verfahren nach einem der Ansprüche 1 bis 6, **dadurch gekennzeichnet** , daß ein aus vier in einer Richtung verlaufenden Lagen aus durchgehenden Fasern bestehendes Gewebe (3) tiefgezogen wird, wobei eine erste Lage (15) den Gewebeschuß bildet und die zweite (16) Lage die Gewebekette bildet und die beiden anderen Lagen (17, 18) zwei Diagonalen bilden, deren Fasern jeweils einen beliebigen Winkel zueinander und zu den beiden ersten Lagen einnehmen können.

8. Verfahren nach Anspruch 7, **dadurch gekennzeichnet**, daß die Fasern jeder Gewebelage (3) zu Paketen zusammengefaßt sind und daß an jedem Punkt der Oberfläche, wo vier Pakete (151, 161, 171, 181) von Fasern übereinander liegen, eine unauflösbare Schlinge (19, 20) angeordnet ist.

9. Verfahren nach Anspruch 8, **dadurch gekennzeichnet**, daß eine Schlinge aus zwei Fäden (21, 22) besteht, die sich zwischen zwei Serien von vier übereinander liegenden Faserpaketen kreuzen.

10. Verfahren nach einem der Ansprüche 1 bis 9, **dadurch gekennzeichnet**, daß die Matrize (1) und-/oder der Stempel (2) vor dem Einspritzen oder dem Zusammendrücken des Harzes oder Bindemittels vorgewärmt werden.

11. Verfahren nach Anspruch 1, **dadurch gekennzeichnet**, daß das Zusammenpressen zwischen dem Stempel (2) und der Matrize (1) der aus dem Harz (9) oder dem Bindemittel und dem Gewebe (3) gebildeten Einheit dadurch herbeigeführt wird, daß man das gesamte Volumen des Stempels (2) im Innern der Matrize zwischen dem Ende der Tiefziehphase und dem Ende der Polymerisationsphase auf kontrollierte Weise erhöht.

12. Vorrichtung für die Anwendung des Verfahrens gemäß den Ansprüchen 1 bis 11, bestehend aus einer Hohlmatrize (1), einem Stempel (2) sowie Mitteln zur Beheizung der Matrize (1) und/oder des Stempels (2), **dadurch gekennzeichnet**, daß sie außerdem Mittel (4, 5) enthält, um beiderseits des Gewebes (3) rund um die Ränder des Matrizenhohlraums einen geregelten Druck zu gewährleisten.

13. Vorrichtung nach Anspruch 12, **dadurch gekennzeichnet**, daß die Mittel (4, 5) zur Gewährleistung eines geregelten Drucks einen Niederhalter einschließen, bestehend aus wenigstens zwei Backen (4, 5), die im Verhältnis zueinander angenähert werden können.

14. Vorrichtung nach Anspruch 12, **dadurch gekennzeichnet**, daß die wenigstens eine Leitung (8) zum Einspritzen des Harzes (9) oder des Bindemittels sowie eine Einspritzvorrichtung (10) enthält.

15. Vorrichtung nach Anspruch 14, **dadurch gekennzeichnet**, daß sie wenigstens eine Entspannungsrille (11, 14) an der Matrize (1) und/oder am Stempel (2) und/oder wenigstens einen Schlitz (9) zwischen dem Stempel und einer Backe (5) aufweist.

16. Vorrichtung nach Anspruch 15, **dadurch gekennzeichnet**, daß sie Mittel zur Erfassung der Stabilisierung oder des Abfalls von Einspritzdrücken enthält, wenn das Bindemittel oder das Harz in einer Entspannungsrille einläuft, Mittel zur Unterbrechung der Einspritzung in diesem Moment sowie Mittel zur Steuerung des Drucks und der Inbetriebnahme der Heizmittel.

17. Vorrichtung nach einem der Ansprüche 12 bis 16, **dadurch gekennzeichnet**, daß sie ein Netz von Nuten an der Matrize (1) und/oder am Stempel (2) aufweist, um die Ausbreitung des Harzes (9) des Bindemittels zu begünstigen.

18. Vorrichtung nach Anspruch 12, **dadurch gekennzeichnet**, daß der Stempel (2) im Innern der Matrize auf reversierbare Weise ausdehnbar ist.

19. Vorrichtung nach Anspruch 18, **dadurch gekennzeichnet**, daß der Stempel (2) eine Außenwand besitzt, die mit Hilfe mechanischer Mittel verformbar ist.

20. Vorrichtung nach Anspruch 19, **dadurch gekennzeichnet**, daß der Stempel (2) hohl ist und daß sich die mechanischen Mittel im Innern des Hohlraums befinden und mit der Außenwand verbunden sind.

21. Vorrichtung nach Anspruch 20, **dadurch gekennzeichnet**, daß die mechanischen Mittel aus Schrauben, Hebeln oder Zylindern ausgewählt werden und daß die Außenwand aus verschiedenen Elementen, wie z.B. Lamellen, besteht, worauf die mechanischen Mittel einwirken.

22. Vorrichtung nach einem der Ansprüche 19 bis 21, **dadurch gekennzeichnet**, daß die Außenwand mit einem elastischen Mantel aus einem gegenüber der Polymerisationstemperatur beständigen Material überzogen ist.

23. Vorrichtung nach einem der Ansprüche 19 bis 22, **dadurch gekennzeichnet**, daß die Matrize (1) und/oder der Stempel (2) mit Heizelementen wie z.B. elektrischen Widerständen versehen sind.

24. Vorrichtung nach Anspruch 8, **dadurch gekennzeichnet**, daß der Stempel (2) und die Matrize (1) mit Heizelementen versehen sind und der Stempel (2) aus einem Material besteht, dessen Wärmeausdehnungskoeffizient größer ist als derjenige der Matrize, so daß der Druck durch die Ausdehnung des Stempels (2) bei Inbetriebnahme der Heizelemente erzeugt wird.

25. Vorrichtung nach Anspruch 24, **dadurch gekennzeichnet**, daß der Stempel (2) aus einer Leichtlegierung besteht.

26. Vorrichtung nach Anspruch 25, **dadurch gekennzeichnet**, daß die Matrize aus einem Material besteht, welches unter Stählen oder Guß ausgewählt wird.

## Claims

1. A method for making parts out of a composite material based on a fabric (3) consisting of at least super imposed single-directional layers (15, 16, 17, 18) of continuous fibers unconnected with each other, said layers being pointed in a different direction from one another, and held by means of a stitched connecting thread, the method consisting in stamping the fabric (3) in a die (1) by means of a stamp (2), in impregnating the part with the quantity of resin (9) or of binder needed for the cohesion of the finished part, then in compressing the set formed by the resin or binder and the fabric between the die (1) and the stamp (2) so as to de-gas the resin by rolling, while checking the relative position of the stamp and the die so as to stop the motion of the stamp when said relative position is such that the desired thickness of the part is obtained, then in the polymerization of the resin and carrying the die and/or the stamp to a sufficient temperature, and then in stripping the finished part after having let it cool down along with the die and/or the stamp, characterized in that during the stamping of the fabric (3) and the impregnation of the part, there is applied on each of the fibers, at the edge of the rim of the die hollow a monitored tension having a value varying alternatively.

2. A method according to claim 1, characterized in that the value of the monitored tension applied to the threads at the edge of the hollow rim of the die is modulated by interposing relaxation stages with a value slightly superior to zero.

3. A method according to either of claims 1 and 2, characterized in that it consists in stamping the fabric (3) in a die (1) by means of a stamp (2), while exerting a monitored tension on each of the fibers at the edge of the rim of the die hollow, stopping the movement of the stamp just before the fabric is compressed between the stamp and the die, injecting between the stamp and the die, in the space occupied by the fabric, a quantity of binder or resin (9) needed for the cohesion of the part, compressing the set formed by the resin and the fabric by resuming the motion of the stamp so as to de-gas the resin (9) by rolling while monitoring the relative position of the stamp (2) and the die, then polimerizing the resin by taking the die and/or the stamp to a sufficient temperature, and taking out the finished part after having let the part cool down along with the die and/or the stamp.

4. A method according to claim 3, characterized in that the injecting instant of the quantity or resin needed to be injected is detected, before compressing the resin and fabric and before polimerizing the resin.

5. A method according to any one of claims 1 and 2, characterized in that it consists in placing a quantity of resin (9) at the bottom of the die (1), and then in making the stamp (2) to descend by exerting a monitored tension on the fibers of the fabric, for stamping this fabric, in continuing the downward motion of the stamp (2) when the fabric is in contact with the resin to compress the entire part, so as to make the resin rise between the edges of the die and so as to de-gas the entire part by rolling, and in that it consists in effecting the polymerizing and stripping after having positioned precisely the die and the stamp with respect to each other, so as to obtain the desired thickness of the finished part, and after having ascertained that the quantity of resin is sufficient.

6. A method acccording to claim 5, characterized in that the quantity of resin (9) being insufficient, additional resin is injected (8) before doing the compression with a view to de-gassing.

7. A method according to any one of claims 1 to 6, characterized in that it consists in stamping a fabric (3) consisting of four single-directional layers of continuous fibers, a first layer (15) forming the weft of the fabric, the second layer (16) forming the warp and the other two layers (17, 18) forming two diagonals where the fibers of each layer can make any angle between each other and with the first two layers.

8. A method according to claim 7, characterized in that the fibers of each layer of the fabric (3) are assembled in packets, and in that at each point of the surface where four packets (151, 161, 171, 181) of fibers are superimposed, is placed a run-proof connecting loop (19, 20)

9. A method according to claim 8, characterized in that a loop is made with two threads (21, 22) that intersect each other between two series of four packets of superimposed fibers.

10. A method according to any one of claims 1 to 9, characterized in that the die (1) and/or the stamp (2) are pre-heated before the injection and/or the compression of the resin or binder.

11. A method according to claim 1, characterized in that the compression between the stamp (2) and the die (1) of the set formed by the resin (9) or binder and the fabric (3) is obtained by increasing in a monitored way the entire volume of the stamp (2) inside the die between the end of the stamping stage and the end of the polimerizing stage.

12. A device for implementing the method according to any one of claims 1 to 11, comprising a hollow die (1), a stamp (2) and heating means of the die (1) and/or punch (2), characterized in that it includes more over means (4, 5) to ensure a monitored pressure on either side of the fabric (3) around the edges of the die hollow.

13. A device according to claim 12, characterized in that the means (4, 5) to provide a monitored pressure consist of a clamping device constituted by at least two jaws (4, 5) which can approach each other.

14. A device according to claim 12, characterized in that it includes at least one conduit (8) to inject a resin (9) or binder, and an injection device (10).

15. A device according to claim 14, characterized in that it comprises at least one expansion channel (11, 14) on the die (1) and/or the stamp (2) and/or at least one vent (9) between the stamp and a jaw (5).

16. A device according to claim 15, characterized in that it comprises means to detect the stabilization or fall in the injection pressures when the binder or resin reaches an expansion channel, means to stop the injection at this moment, and means to control the compression and starting of the heating means.

17. A device according to any one of claims 12 to 16, characterized in that it includes a network of grooves on the die (1) and/or on the stamp (2) to promote the diffusion of the resin (9) or the binder.

18. A device according to claim 12, characterized in that the stamp (2) can be expanded reversibly within the die.

19. A device according to claim 18, characterized in that the stamp (2) has an external wall which can be deformed through mechanical means.

20. A device according to claim 19, characterized in that the stamp (2) is hollow and in that the mechanical means are inside the hollow, and are linked to the external wall.

21. A device according to claim 20, characterized in that the mechanical means are chosen from among screws, levers or jacks, and in that the external wall consists of distinct elements such as strips acted upon by the mechanical means.

22. A device according to any one of claims 19 to 21, characterized in that the external wall is coated with an elastic envelope made of a material that withstands the polimerizing temperature.

23. A device according to any one of claims 19 to 22, characterized in that the die (1) and/or the stamp (2) are provided with heating elements such as electrical resistors.

24. A device according to claim 8, characterized in that the stamp (2) and the die (1) being provided with heating elements, the stamp (2) is made of a material with a thermal expansion coefficient greater than that of the die, so that the compression is got by the expansion of the stamp (2) when the heating elements are put into operation.

25. A device according to claim 24, characterized in that the stamp (2) is made of a light alloy.

26. A device according to claim 25, characterized in that the die is made of material chosen from among steels or cast iron.

FIG_1

FIG_2

FIG_3

# FIG_4

# FIG_5-a

# FIG_5-b

# FIG_6

# FIG_7-a

# FIG_7-b